# EUROPEAN PATENT APPLICATION

(11) **EP 2 131 259 A1**
(43) Date of publication of application: **09.12.2009**
(21) Application number: 08275023.3
(22) Date of filing: 04.06.2008
(51) Int. Cl.: G05D 1/02, G06F 3/033, G05B 19/42

(54) **Vehicle System**

(71) Applicant: BAE Systems PLC, London SW1Y 5AD (GB)
(72) Inventor: The designation of the inventor has not yet been filed

(57) **Abstract**

The present invention relates to a vehicle system 10 which comprises a ground vehicle 12 and a base unit 14. The base unit 14 comprises a vehicle control 16 for receiving a user control input 18 and generating a movement control signal 20 according to the control input 18 for controlling movement of the vehicle 12.

The vehicle 12 comprises a drive mechanism 26 for moving the vehicle and a drive control 28 for controlling the drive mechanism. The control signal 20 is input to the drive control 28 and a memory 30, so that data corresponding to movement of the vehicle can be stored for retrieval on demand.

When a retrace condition is established by a retrace sensor 32 the vehicle automatically retraces its movement path until the signal strength increases above a second threshold at which adequate transmission of signal can occur.

## Description

### Field of the Invention

This invention relates to a vehicle system comprising a ground vehicle.

### Background of the Invention

Vehicle systems are known which comprise: a ground vehicle; and a remote vehicle control for receiving a user control input and generating a movement control signal according to said control input for controlling movement of the vehicle. If such a ground vehicle is moved over a surface of the ground and the signal between the ground vehicle and the remote control is lost or impaired, control of the vehicle is not possible and the vehicle must be retrieved manually or the position of the control must be moved in order to reestablish the signal.

### Summary of the Invention

According to the present invention there is provided a vehicle system comprising:
a ground vehicle;
a vehicle control for receiving a user control input and generating a movement control signal according to said control input for controlling movement of the vehicle;
a memory for storing movement data corresponding to movement of the vehicle;
a retrace sensor for sensing when a retrace condition is established;
a retrace control for retrieving said movement data from said memory and generating a retrace control signal for controlling retracing movement of the vehicle when said retrace condition is established.

Other preferred and/or optional features of the invention are defined in the accompanying claims.

In order that the present invention may be well understood, an embodiment thereof, which is given by way of example only, will now be described with reference to the accompanying drawings, in which:-

### Brief Description of the Drawings

Figure 1 is a schematic representation of a vehicle system comprising a ground vehicle and base unit;
Figure 2 is a table showing an example of vehicle movement and corresponding movement data for normal operation of the system shown in Figure 1;
Figure 3 shows vehicle movement during the normal operation described in Figure 2;
Figure 4 is a table showing an example of vehicle movement and corresponding retrace control signals for retracing operation of the vehicle;
Figure 5 shows vehicle movement during the retracing operation described in Figure 4; and
Figure 6 shows the vehicle in more detail.

### Detailed Description of the illustrated embodiments

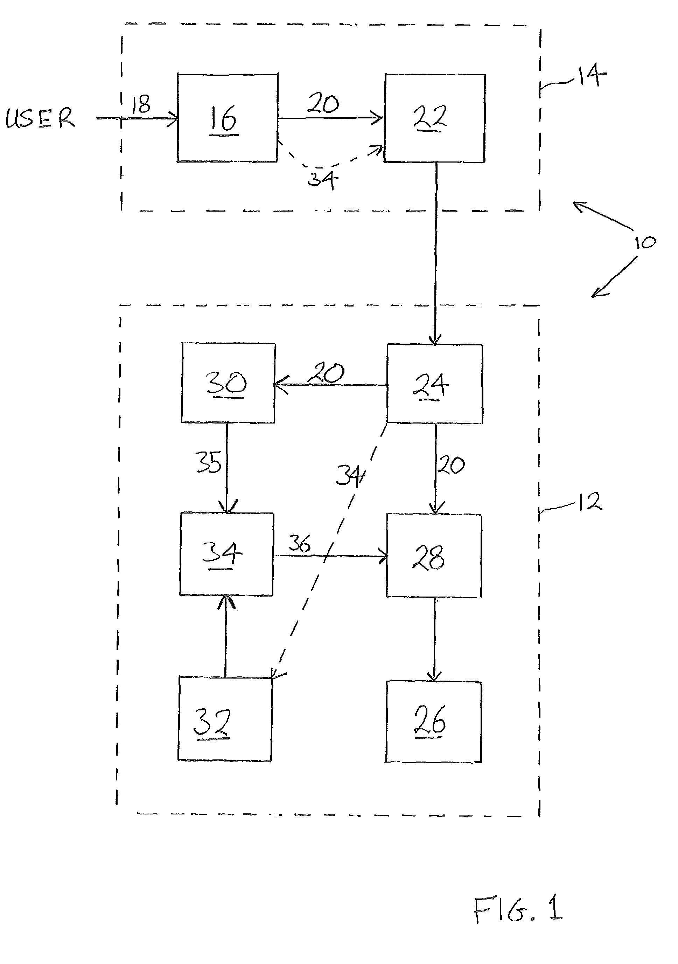

Referring to Figure 1, a vehicle system 10 is shown which comprises a ground vehicle 12 and a base unit 14 which may be remote from the vehicle. The vehicle and the base unit can communicate with the vehicle so that a user at the base unit can control movement of the vehicle. Alternatively, the base unit may be integral with the vehicle if the vehicle is manned.

As shown in Figure 1, the vehicle 12 is unmanned and may be sized approximately 60cm in length by 40cm in width by 15cm in height. However, the vehicle is not restricted to these dimensions and can be of any suitable size. If the vehicle is unmanned, it is suitable for carrying out tasks for which it is not possible, inhospitable or dangerous for a person to undertake. Additionally, if the vehicle is sized as indicated above, the vehicle is relatively inconspicuous and can be used as a scout taking up an advanced position ahead of following personnel.

The base unit 14 comprises a vehicle control 16 for receiving a user control input 18 and generating a movement control signal 20 according to the control input 18 for controlling movement of the vehicle 12. The base unit 14 comprises a transmitter 22 for transmitting control signals 20 to the ground vehicle 12 and the ground vehicle comprises a receiver 24 for receiving control signals 20 from the transmitter 22. The transmitter 22 and the receiver 24 may be transceivers if two-way communication between the vehicle 12 and the base unit 14 is required. The transmitter 22 and receiver 24 may be adapted to communicate wirelessly, for example the transmitter may be an RF or microwave transmitter and the receiver may be an RF or microwave receiver. Alternatively, the transmitter 22 may be connected for communication with the receiver 24 by wire or optical fibre.

The base unit 14 may be a standard computer or laptop computer with a human user interface such as a display and keyboard. The vehicle control may comprise directional keys on the keyboard or a separate stick control, such as a joy-stick may be provided. Alternatively, a bespoke base unit may be specifically designed for the purpose.

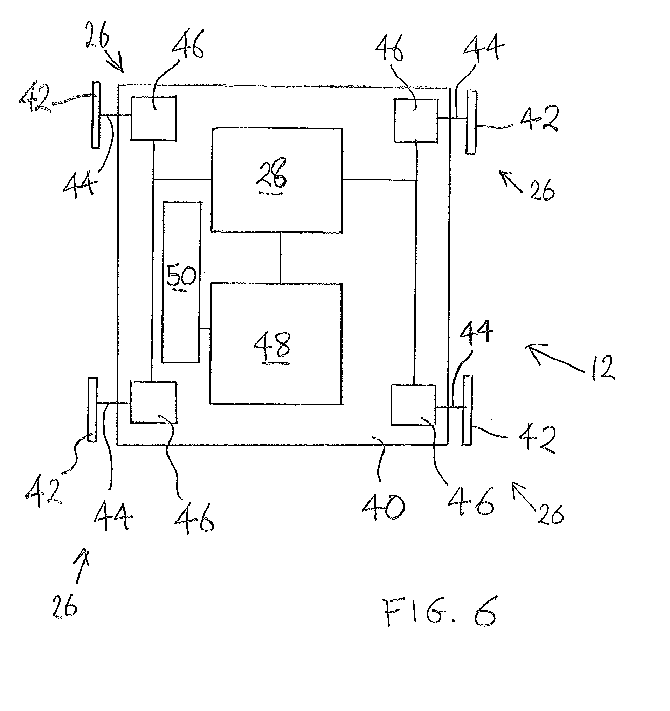

As described in more detail below with reference to Figure 6, the vehicle 12 comprises a drive mechanism 26 for moving the vehicle over the ground and a drive control 28 for controlling the drive mechanism. The drive mechanism may comprise a plurality of wheels, typically four or six wheels. Alternatively, the drive mechanism may comprise tracks. A wheeled mechanism is more suited for driving the vehicle on relatively smooth terrain, whereas a tracked mechanism is more suited to relatively rough terrain. The drive mechanism may be dirigible. In this regard, at least a pair of wheels of a wheeled mechanism can be steered in accordance with a user control input. Alternatively, left and right tracks of a tracked mechanism may be rotatable independently one from another in order to rotate the vehicle about its centre. In both a wheeled and a tracked mechanism, the vehicle is capable of being driven in forward and reverse.

The control signal 20 is received by the drive control 28. The drive control may comprise sub-components such, as frequency converters, for independent control of respective motors of the wheels or tracks of the drive mechanism and for steering the vehicle.

The control signal 20 is also input to a memory 30, which may be RAM, tape or other storage device, so that movement data corresponding to movement of the vehicle can be stored for retrieval on demand. The memory stores the control signals so that an inverse of the control signals can be read in a reverse order to the order in which the control signals are input to the memory. A clock circuit or other time device (not shown) is used so that each control signal input to the memory can be stored according to the time at which the control signal is received by the vehicle 14. Accordingly, each control signal is associated with an input time so that control signals can be retrieved depending on their time of input.

Movement data can be input to the memory in accordance with the control signals 20 or in any other suitable way. For example, the drive control 28 may also comprise an encoder for determining rotation of the drive mechanism such that the actual movement of the vehicle can be determined and for outputting movement data corresponding to that movement. For instance, the drive control may comprise one or more odometers for measuring rotation of the wheels or the tracks. An additional sensor which can be incorporated to provide directional data is a compass for instance having one or more magnetic field strength sensors. The output from such a compass may also be stored in memory 30. Further, inertial or gyroscopic sensors can be adopted to output movement data to the memory.

The vehicle may comprise a location sensor (not shown) for sensing a location of the vehicle. The location sensor may sense the location relative to one or more fixed or moving references. A GPS navigation system is one example of a suitable system for this purpose. The location sensor outputs movement data corresponding to the change in location of the vehicle over time.

Movement data can be derived from more than one of the sensors and control signals described above, for instance, so that data from one source can be used to correct or check data from another source. The data from each source can be assessed fro accuracy and the best movement data adopted to improve accuracy of retracing movement. For instance, if movement data is derived from three sources, if data from one source is dissimilar from data from the two other sources, the data from the first source can be disregarded.

A retrace sensor 32 is provided for sensing when a retrace condition is established. In this example, the retrace sensor 32 is configured to sense when a signal strength between the base unit 14 and the ground vehicle 12 reduces below a first threshold. The first threshold may be set such that at a signal strength below the threshold a control signal cannot be adequately transmitted from the transmitter 22 of the base unit to the receiver 24 of the vehicle. Signal strength may be reduced for instance by electro-magnetic interference or if a physical object is located between the base unit and vehicle. When such a retrace condition is established the vehicle automatically retraces its movement path until the signal strength increases above a second threshold at which adequate transmission of signal can occur. The first threshold and the second threshold may be equal, or the second threshold may be greater than the first threshold. Once the signal strength has increased above the second threshold, the vehicle stops retracing its path and can be controlled by the user.

Additionally, or alternatively, the retrace sensor 32 is configured to sense when a retrace condition is established by a retrace input being input to the vehicle control 16 by a user. A signal 34 is generated by the vehicle control in accordance with the retrace input (as shown by broken lines in Figure 1) which is transmitted to the retrace sensor 32 in the vehicle. The vehicle control 16 may for instance comprise a button (e.g. a panic button) which can be pressed by the user in order to initiate retracing movement of the vehicle. When the button is released retracing movement of the vehicle terminates and normal operation can resume. The user may input a retrace input to the vehicle control 16 if for instance the user has navigated the vehicle along a tortuous path around obstacles and wishes to reverse the vehicle to a previous position without having to navigate the obstacles again.

Other examples of retrace sensors include a movement detector, or a heat detector. Accordingly, the vehicle can sense movement of an object or person, particularly line-of-sight movement, so that the vehicle can retrace its movement until that movement is no longer detected. Further, the vehicle can be programmed to retrace movement away from a potentially damaging heat source.

The vehicle comprises a retrace control 34 for reading movement data 35 from memory 30 and generating a retrace control signal 36 for controlling retracing movement of the vehicle when a retrace condition is established. The retrace control 34 causes retracing movement of the ground vehicle only when the retrace sensor senses that a retrace condition is established. For example, the retrace sensor 32 may output a binary "1" when a retrace condition is established and a binary "0" in the absence of a retrace condition.

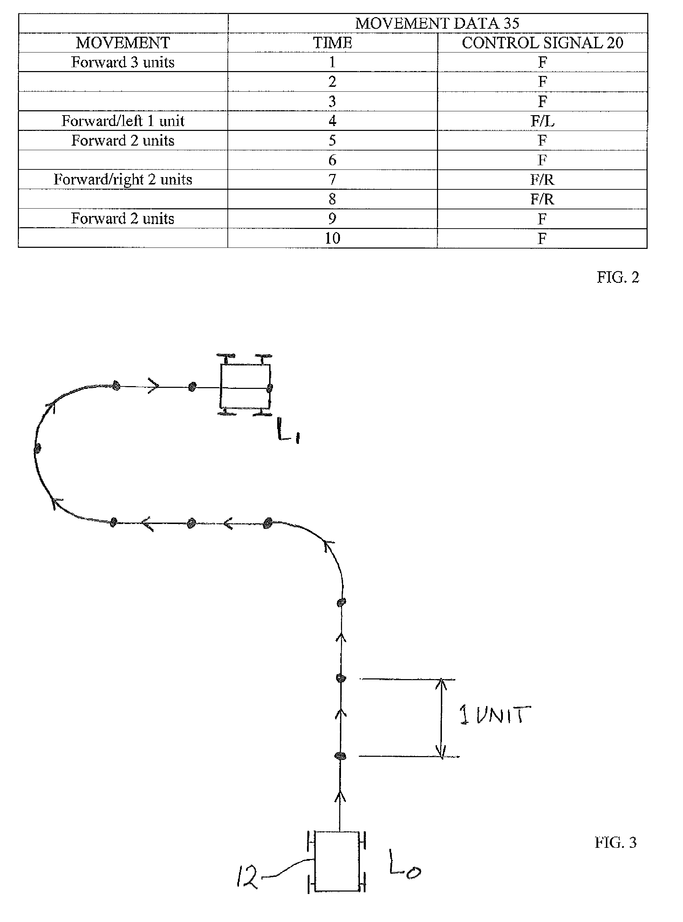

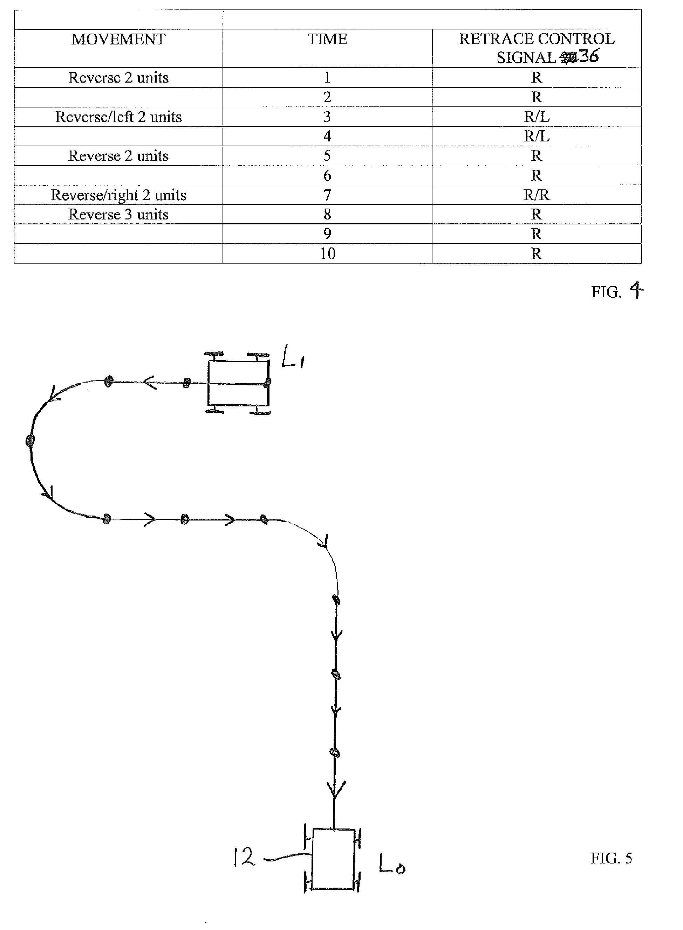

As one example of operation of system 10, Figures 2 and 3 show normal operation of vehicle 12 and Figures 4 and 5 show retracing operation of vehicle 12. The system in this example stores control signals 20 in memory 30. As indicated above, movement data may be derived from other suitable sources for instance it may be derived from data corresponding to locations or movement of the vehicle retrievable in time ordered sequence.

Referring to Figures 2 and 3, the vehicle 12 is shown prior to movement at location L₀, and following movement at location L₁. Movement of the vehicle is expressed in distance units which may be of any suitable length. Time is expressed in time units and in this example a time unit is the time taken for the vehicle 12 to move one distance unit.

As shown in the table in Figure 2, the user in this example initially inputs a control input 18 of "forward". The duration of this control input is three time units (i.e. time 1 to 3). Accordingly, the corresponding control signal 20 is "F" for three consecutive time units. The control signal 20 is input to the drive control which in turn controls the drive mechanism to move the vehicle forward three units.

The control signal 20 is also input to memory 30 which stores movement data 35 corresponding to movement of the vehicle in normal operation. The memory 30 stores the movement control signals in time ordered sequence (i.e. the control signals 20 can be retrieved by retrace control 34 according to the order in which they are input). The actual physical location of the control signals 20 may be random provided each control signal is associated with a time of input. Continued control inputs over the remaining time shown in Figures 2 and 3 (i.e. time 4 to 10) by the user moves the vehicle to location L₁ as shown in Figure 3. In this example, for simplicity, the user may input a "forward/left" command and a "forward/right" command so that the drive mechanism 26 turns the vehicle through 90° left or 90° right, respectively.

As shown in Figures 4 and 5, a retrace condition is sensed by retrace sensor 32 when the vehicle 12 is at location L₁. The retrace control 34 controls retracing movement of the vehicle so that the vehicle retraces its movement until the retrace senses an absence of the retrace condition. As indicated above, a retrace condition may be established for example if the signal strength between the vehicle 12 and the base 14 reduces below a threshold or if the user inputs a retrace input to control 16.

The retrace control 34 reads movement data 35 from memory 30. In this example, the memory 30 stores movement data in a chronological sequence according to time 1 to 10. Accordingly, the retrace control 34 retrieves the movement data and processes it so that the chronological order is reversed. The retrace control also inverses the stored control signal 20. Accordingly, the control signals are inversed and retrieved in reverse chronological order so that retracing movement of the vehicle can be controlled.

For example, when the vehicle is at location L₁, the most recent movement of the vehicle at time unit 10 was "forward one unit" in response to control signal "F". Accordingly, retrace control signal 36 at time unit 1 of the retracing operation shown in Figures 4 and 5 is "R". The retrace control signal 36 is transmitted to the drive control 28 which controls movement of the vehicle to "reverse one unit". Accordingly, retrace control 34 reads the movement data 35 and generates a retrace control signal which is inversed from the control signal and corresponds to a reverse of the time ordered sequence so that the retrace control signal 36 causes the vehicle to retrace its movements.

Alternatively, the control signal 20 may be processed prior to storage in memory 30. Accordingly, an inverse of the control signals may be stored. In this case, the retrace control 34 can simply read the stored movement data to produce retracing movement of the vehicle.

As shown in Figures 4 and 5, the retrace control controls retracing movement of the vehicle over time units 1 to 10 in the retracing operation until the retrace sensor senses an absence of a retrace condition when the vehicle is at location L₀.

Referring to Figure 6, one example of a vehicle 12 is shown in more detail. The vehicle 12 comprises a vehicle body 40. The drive mechanism 26 comprises four wheels 42 connected for rotation by shafts 44 to respective electric motors 46. Each electric motor is connected to the drive mechanism 28 for receiving drive control signals for controlling rotation of the wheels 42. The drive control 28 receives movement signals from the wheels so that movement of the wheels, and hence the vehicle, can be determined. Unit 48 comprises receiver 24, memory 30, retrace control 34 and retrace sensor 32. Unit 48 may additionally comprises location or movement sensors as described in more details above. A power source 50, such as a lithium or other type of battery, provides the vehicle 12 with electrical power.

The vehicle 12 may comprise an odometer or other means for measuring or determining rotation of each of the wheels so that provided an initial position of the vehicle 12 is known, a second position of the vehicle can be measured or determined from rotation of the wheels. For instance, if rotation of the front wheels of a vehicle is measured and the left front wheel rotates four times over a given period and the right front wheel rotates three times over that period then it can be determined that the vehicle has moved forward whilst turning towards the right. The odometer means may be configured to sense rapid unpredicted rotation of a wheel for instance when a wheel slips over a loose surface and discount such rotation when determining movement of the vehicle over the ground. The odometer means receives rotation information from each of the wheels and calculates movement based on rotation of all of the wheels.

The invention has been described by way of several embodiment, with modifications and alternatives, but having read and understood this description further embodiments and modifications will be apparent to those skilled in the art. All such embodiments and modifications are intended to fall within the scope of the present invention as defined in the accompanying claims.

## Claims

1. A vehicle system comprising:
a ground vehicle;
a vehicle control for receiving a user control input and generating a movement control signal according to said control input for controlling movement of the vehicle;
a memory for storing movement data corresponding to movement of the vehicle;
a retrace sensor for sensing when a retrace condition is established;
a retrace control for retrieving said movement data from said memory and generating a retrace control signal for controlling retracing movement of the vehicle when said retrace condition is established.

2. A system as claimed in claim 1, wherein said movement data comprises movement control signals in time ordered sequence.

3. A system as claimed in claim 1 or 2, wherein said movement data comprises data corresponding to locations or movement of said vehicle in time ordered sequence.

4. A system as claimed in claim 2 or 3, wherein said retrace control reads said movement data and generates a retrace control signal causing retracing movement of said vehicle.

5. A system as claimed in any preceding claim, comprising a base unit for communication with said ground vehicle and wherein said base unit comprises said vehicle control.

6. A system as claimed in claim any preceding claim, wherein said base unit comprises a transmitter for transmitting control signals to said ground vehicle and said ground vehicle comprises a receiver for receiving control signals from said vehicle control.

7. A system as claimed in claim 6, wherein said retrace sensor is configured to sense when a signal strength between the base unit and ground vehicle reduces below a threshold.

8. A system as claimed in claim 7, wherein said retrace control causes retracing movement of said ground vehicle until said retrace sensor senses that signal strength is above a threshold.

9. A system as claimed in any preceding claim, wherein said retrace sensor is configured to sense when a retrace input is input to said vehicle control by a user.

10. A system as claimed in claim 9, wherein said retrace control causes retracing movement of said ground vehicle until said retrace sensor senses an absence of said retrace input.

11. A system as claimed in claim 10, wherein said ground vehicle comprises a location sensor for sensing a location of the vehicle and generating location data which can be input to said memory in time ordered sequence.

12. A system as claimed in claim 11, wherein said location sensor sense the location relative to one or more fixed or moving references.

13. A system as claimed in any preceding claim, wherein said vehicle comprises a drive mechanism for moving said vehicle over the ground and a drive control for controlling said drive mechanism in response to a control signal from said vehicle control or a retrace control signal from said retrace control.

14. A system as claimed in any preceding claim, comprising a movement sensor for sensing movement of the vehicle and generating movement data which can be input to said memory in time ordered sequence.

15. A system as claimed in claim 14, wherein said drive control comprises an encoder for determining rotation of the drive mechanism.
